Europäisches Patentamt

European Patent Office

Office européen des brevets

(11) Veröffentlichungsnummer: **0 391 116**
**A1**

## (12) EUROPÄISCHE PATENTANMELDUNG

(21) Anmeldenummer: 90105094.8

(22) Anmeldetag: 19.03.90

(51) Int. Cl.⁵: **C08K 5/3492, C08L 71/00,**
**C08L 75/04, C08J 9/00,**
**//(C08K5/3492,5:21),**
**(C08K5/3492,5:39)**

(30) Priorität: 04.04.89 AT 781/89

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **Chemie Linz Gesellschaft m.b.H.**
**St.Peter-Strasse 25**
**A-4021 Linz(AT)**

(72) Erfinder: **Horacek, Heinrich, Dr.**
**Bockgasse 43**
**A-4020 Linz(AT)**
Erfinder: **Heger, Friedl**
**Altenberger Strasse 5**
**A-4020 Linz(AT)**
Erfinder: **Coufal, Gerhard, Dipl.-Ing.**
**Boschweg 2B**
**A-4020 Linz(AT)**

(74) Vertreter: **Kunz, Ekkehard, Dr.**
**Chemie Holding AG Patentwesen St.**
**Peter-Strasse 25**
**A-4021 Linz(AT)**

(54) **Melaminzubereitung und stabile Dispersion von Melamin in Polyetherolen.**

(57) Melaminzubereitung aus 80 bis 99,9 Gew.% Melamin mit einer mittleren Korngröße von 0,01 bis 0,1 mm und 0,1 bis 20 Gew.% Harnstoff, Thioharnstoff, Biuret oder eines durch niedere Alkylgruppen substituierten Harnstoffs oder Thioharnstoffs, sowie eine daraus hergestellte stabile Dispersion in Polyetherolen, die zur Herstellung von schwer entflammbaren Polyurethanschaumstoffen verwendet wird.

EP 0 391 116 A1

## Melaminzubereitung und stabile Dispersion von Melamin in Polyetherolen

Die Erfindung betrifft eine Melamin und Harnstoff, Thioharnstoff, Biuret oder durch niedere Alkylgruppen substituierten Harnstoff oder Thioharnstoff enthaltende Melaminzubereitung, eine daraus hergestellte stabile Dispersion in Polyetherolen sowie deren Verwendung zur Herstellung von Polyurethanschaumstoffen.

Bei der Herstellung von flammfesten Polyurethanschaumstoffen erweist es sich als besonders vorteilhaft, Melamin als Flammschutzmittel einzusetzen. Dabei wird eine Dispersion von Melamin in einem Polyol mit Isocyanat, Schaumbildnern sowie üblichen Zusatz- und Hilfsstoffen, umgesetzt. Ein Nachteil der Melamin-Polyol-Dispersionen liegt darin, daß sie sofort verarbeitet werden müssen, da das Melamin bereits nach kurzer Zeit sedimentiert. Aus der DE-OS-29 32 304 ist bekannt, daß die Lagerstabilität von Melamin-Polyol-Dispersionen durch Verwendung von feinstgemahlenem Melamin mit einer Teilchengröße von unter 0,01 mm sowie durch Verwendung von Kieselsäure, perfluorierten Alkylcarbonsäuren, Alkylsulfonsäuren, Polyperfluorätherolen oder Fettalkoholsulfaten als Stabilisatoren erhöht werden kann. Der Nachteil dieser Polyol-Dispersionen liegt vor allem darin, daß das Melamin in einem zusätzlichen Verfahrensschritt mit hohem Energieaufwand gemahlen werden muß. Ein weiterer Nachteil dieser kleinen Partikel besteht darin, daß sie Dispersionen mit hohen Viskositäten und dadurch bedingter schwieriger Handhabung und Weiterverarbeitung ergeben (K. E. J. Barrett, Dispersion Polymerisation in Organic Media, Fig. 6, 2, John Wiley, London 1975). Weiters besitzen Schaumstoffe, die aus Dispersionen mit derart kleinen Partikeln hergestellt werden, schlechte mechanische Eigenschaften (M. Genz, O. M. Grace, S. Gagnon, PRI-Urethane Group International Symposium, "New Flame Resistant Flexible Foams" (14. Oktober 1987).

Die Aufgabe der Erfindung lag nun darin, eine stabile, nicht schäumende Melamin-Polyol-Dispersion sowie eine Melaminzubereitung zur Herstellung dieser Dispersion zu finden, bei der diese Nachteile nicht auftreten. Überraschenderweise wird die Aufgabe durch Melaminzubereitungen bzw. daraus hergestellte Melamin-Polyol-Dispersionen mit einem Gehalt an Harnstoff, Thioharnstoff, Biuret oder durch niedere Alkylgruppen substituierten Harnstoff oder Thioharnstoff gelöst.

Gegenstand der vorliegenden Erfindung ist demnach eine Melaminzubereitung aus 80 bis 99,9 Gew.%, bevorzugt 80 bis 99,3 Gew.% Melamin mit einer mittleren Korngröße von 0,01 bis 0,1 mm und 0,1 bis 20 Gew.%, bevorzugt 0,7 bis 20 Gew.% Harnstoff, Thioharnstoff, Biuret oder eines durch niedere Alkylgruppen substituierten Harnstoffs oder Thioharnstoffs zur Herstellung einer stabilen Dispersion in Polyetherolen, wobei Melamin von 0 bis 50 % seines Gewichtes durch weitere Flammschutzmittel ersetzt sein kann.

Ein weiterer Gegenstand der Erfindung ist die Verwendung dieser Melaminzubereitung aus 80 bis 99,9 Gew.%, bevorzugt 80 bis 99,3 Gew.% Melamin mit einer mittleren Korngröße von 0,01 bis 0,1 mm und 0,1 bis 20 Gew.%, bevorzugt 0,7 bis 20 Gew.% Harnstoff, Thioharnstoff, Biuret oder eines durch niedere Alkylgruppen substituierten Harnstoffs oder Thioharnstoffs zur Herstellung einer stabilen Dispersion in Polyetherolen, wobei Melamin von 0 bis 50 % seines Gewichtes durch weitere Flammschutzmittel ersetzt sein kann.

Ein weiterer Gegenstand der Erfindung ist eine stabile Dispersion von Melamin in Polyetherolen mit einem Gehalt von 20 bis 70 Gew.% Melamin sowie gegebenenfalls weiteren üblichen Zusätzen, die dadurch gekennzeichnet ist, daß sie 0,1 bis 5 Gew.% Harnstoff, Thioharnstoff, Biuret oder eines durch niedere Alkylgruppen substituierten Harnstoffs oder Thioharnstoffs enthält, daß die mittlere Korngröße des Melamins bei 0,01 bis 0,1 mm liegt und daß Melamin von 0 bis 50 % seines Gewichtes durch weitere Flammschutzmittel ersetzt sein kann.

Das eingesetzte Melamin ist im Handel erhältlich, beispielsweise von Chemie Linz, ein zusätzlicher Mahlvorgang zur Reduzierung der Teilchengröße ist nicht erforderlich. Unter mittlerer Korngröße von 0,01 bis 0,1 mm ist zu verstehen, daß mindestens 90 Gew.% der Partikel eine Korngröße von 0,01 bis 0,1 mm besitzen (DIN 66141). Der Melamingehalt der Dispersion liegt bei 20 bis 70 Gew.%, wobei ein hoher Melamingehalt im Schaumstoff eine erhöhte Flammfestigkeit des Endproduktes, jedoch auch eine höhere Viskosität der Dispersion bewirkt. Eine Dispersion mit einem Feststoffgehalt von beispielsweise 50 Gew.%, bestehend aus Melamin und Harnstoff, Biuret oder durch niedere Alkylgruppen substituierten Harnstoff oder Thioharnstoff besitzt eine Viskosität, die etwa 5 bis 15 mal höher ist als jene des eingesetzten Polyetherols.

Harnstoff, Thioharnstoff, Biuret sowie durch niedere Alkyle substituierter Harnstoff oder Thioharnstoff sind ebenfalls kommerziell erhältlich. Sie werden in Mengen von 0,1 bis 5 Gew.%, bevorzugt 0,5 bis 5 Gew.%, bezogen auf die fertige Dispersion, eingesetzt. Als substituierter Harnstoff oder Thioharnstoff kommen beispielsweise Mono-, Di-, Tri- und Tetraalkylharnstoffe, Arylharnstoffe, Alkylarylharnstoffe, Alkylol- und Alkylenharnstoffe oder N-Acylharnstoffe, wie z. B. Monomethylharnstoff, Dimethylharnstoff, O-Methylharnstoff, Diphenylharnstoff, Ethylen- und Propylenharnstoff, Isoharnstoff und Triuret in Frage. Zusätzlich zu der die Dispersion stabilisierenden Wirkung steigt mit höherem Gehalt an Harnstoffderivaten ebenfalls die Viskosität der Dispersion. Die Viskosität der erfindungsgemäß stabilisierten Dispersion ist jedoch geringer als jene vergleichbarer bekannter Dispersionen mit einer Teilchengröße des Melamins von unter 0,01 mm.

Als Polyetherole kommen alle in der Polyurethan-Herstellung gebräuchlichen, beispielsweise Polymerisate bzw. Polykondensate aus Ethylenoxid, Propylenoxid oder Tetrahydrofuran, in Frage. Das Molekulargewicht der Polyetherole liegt üblicherweise im Bereich von etwa 200 bis 6 500 g/mol, die OH-Zahl bei etwa 25 bis 600, bevorzugt bei 20 bis 40. Es können auch polymermodifizierte Polyole, wie sie beispielsweise in der GB-A-21 63 762 beschrieben sind, und die zur Beeinflussung der Zellstruktur bei der Herstellung von Polyurethan-Schäumen dispergierte Polymere, z. B. Alkanolamin-Isocyanat-Polyadditionspolymere, enthalten, verwendet werden. Derartige polymermodifizierte Polyetherole sind beispielsweise Desmophen$^R$ 3699 oder 7652 von Bayer, Multranol$^R$ 9225 von Mobay, Niax$^R$ 34 - 28 von UCC, Polyurax$^R$ 1408 von BP, Voranol$^R$ 8020 von DOW oder Pluracol$^R$ 581 von BWC. Nichtmodifizierte Polyetherole sind z. B. Desmophen$^R$ 3900 von Bayer oder Caradol$^R$ 36-3 von Shell. Es ist auch möglich, Gemische verschiedener Polyole zu verwenden.

Die Melaminzubereitung bzw. die Melamin-Polyetherol-Dispersion kann gegebenenfalls zusätzlich zum Melamin noch weitere Flammschutzmittel, beispielsweise phosphor- oder halogenhältige, enthalten, wie z.B N-2,4,6-Tribromphenylmaleinimid (Chemie Linz), Bisdibromneopentylglykolborsäureguanidin (SA 136 von Chemie Linz), Tris-1,3-dichlorpropylphosphat (Amgard$^R$ TDCP/LV von Albright und Wilson), Phosphorsäure-bis(2-chlorethyl)ester, Diester mit 2,2-Bischlormethyl-1,3-propandiol, Tetrakis (2-chlorethyl)-ethylendiphosphat (Thermolin 101, Fa. Olin) und Trisdichlorethylphosphat (Disflamoll TCA von Bayer), wobei Bisdibromneopentylglykolborsäureguanidin besonders gute Ergebnisse bringt.

Als Treibmittel können üblicherweise Wasser oder halogenierte Kohlenwasserstoffe, beispielsweise Trichlorfluormethan, Dichlordifluormethan oder Methylenchlorid der Dispersion zugesetzt werden.

Weiters können die Melamin-Polyetherol-Dispersionen Zusätze enthalten, die bei der Polyurethanherstellung üblich sind, wie z.B. Katalysatoren, Kettenverlängerungsmittel, Vernetzer, Schaumstabilisatoren, Porenregler, Stabilisatoren, Füll-und Hilfsstoffe. Als Katalysatoren kommen beispielsweise Zinnoctoat, Dibutylzinndilaurat oder Diazobicyclooctan (z. B. Dabco$^R$ 33LV von Fa. Air Products), als Schaumstabilisatoren Silan-Copolymere wie z.B. Silicon 5043 von Dow Corning, als Vernetzer Diethanolamin oder Glycerin, als Kettenverlängerungsmittel Butandiol oder Ethylenglykol in Frage.

Die erfindungsgemäßen Dispersionen sind einfach herzustellen und schäumen nicht. Sie werden durch einfaches Einrühren von Melamin und Harnstoff, Thioharnstoff, Biuret oder durch niedere Alkylgruppen substituierten Harnstoff oder Thioharnstoff und den jeweils gewünschten Zusätzen bei Temperaturen von etwa 20 bis 80°C und anschließende Homogenisierung, beispielsweise unter Verwendung eines gewöhnlichen Ankerrührers, hergestellt. Die Verwendung einer Kugelmühle ist nicht erforderlich.

Die Dispersionen werden bevorzugt zur Herstellung von flammfesten Polyurethan-Schaumstoffen verwendet. Die Herstellung der Schaumstoffe gelingt beispielsweise wie in DE-OS-29 3304 beschrieben, durch Umsetzung der Dispersionen mit einem Isocyanat z. B. mit Diphenylmethandiisocyanat oder Toluyli dendiisocyanat unter Zusatz von Schaumbildnern. Die verwendete Dispersion kann vor der Umsetzung gegebenenfalls mit einem Polyol weiter verdünnt werden. Da die Dispersionen keine grenzflächenaktiven Substanzen, wie beispielsweise Emulgatoren oder Seifen enthalten, verläuft die Umsetzung kontrolliert, unter Ausbildung einer einheitlichen Zellstruktur ohne störende Wirkung auf das durch Schaumstabilisatoren unterstützte Schäumverhalten.

Der in den folgenden Beispielen verwendete Harnstoff (feingeprillt, Chemie Linz) hatte eine mittlere Korngröße von 0,5 mm. Das verwendete Melamin (Chemie Linz) wies eine gemäß DIN 66141 gemessene Korngrößenverteilung auf, bei der 95 Gew.% der Körner eine Korngröße zwischen 0,01 und 0,1 mm besaßen.

Vergleichsbeispiel V1:

In einem 1 m³ Rührkessel mit Ankerrührer wurden 325 kg eines polymermodifizierten Polyetherols mit einer bei 25°C gemessenen Viskosität von 1600 m Pas (entsprechend Polyurax$^R$ 1408 von BP) vorgelegt und bei 50°C und einer Rührgeschwindigkeit von 45 Upm während 30 min 325 kg Melamin, entsprechend einem Melamingehalt der Dispersion von 50 Gew.%, eingerührt. Anschließend wurde zur Homogenisierung der Dispersion 90 min weitergerührt. Die erhaltene Dispersion besaß eine Viskosität von 15 000 mPas (20°C) und sedimentierte innerhalb von 3 Tagen.

Vergleichsbeispiel V2:

3

Analog zu Vergleichsbeispiel V1 wurde eine Melamindispersion hergestellt, wobei jedoch an Stelle des polymermodifizierten Polyols ein unmodifiziertes Polyetherol, entsprechend Desmophen[R] 3900 von Bayer mit einer bei 25 °C gemessenen Viskosität von 850 mPas und einer OH-Zahl von 35, verwendet wurde. Die erhaltene Dispersion hatte eine Viskosität von 6000 mPas (20 °C) war nicht lagerstabil und sedimentierte innerhalb von 3 Tagen.

## Beispiel 1:

In einem 1 m³ Rührkessel mit Ankerrührer wurden 325 kg eines polymermodifizierten Polyetherols, entsprechend Polyurax[R] 1408 von BP, vorgelegt und bei 50 °C und einer Rührgeschwindigkeit von 45 Upm während 30 min ein Gemisch aus 321 kg Melamin und 4 kg Harnstoff eingerührt. Anschließend wurde zur Homogenisierung der Dispersion 90 min weitergerührt. Die Viskosität der erhaltenen Dispersion lag bei 20 000 mPas (20 °C), sie war länger als 6 Monate stabil ohne zu sedimentieren.

## Beispiele 2 bis 17

Analog zu Beispiel 1 wurden Melamindispersionen in den in Tabelle 1 und 2 angeführten Polyetherolen mit Zusatz der in Tabelle 2 angegebenen Mengen von Melamin und Harnstoff bzw. Harnstoffderivaten hergestellt. In Beispiel 8 wurden 10 Gew.% Trisdichlorpropylphosphat (TDCP) als zusätzliches Flammschutzmittel zugegeben. In Beispiel 10 wurden als zusätzliche Flammschutzmittel 10 Gew.% TDCP und 25 Gew.% Bisdibromneopentylglykolborsäureguanidin (SA 136 von Chemie Linz) mitverwendet. In Beispiel 13 wurden zusätzlich 5 Gew.% Trisdichlorethylphosphat (TCA), im Beispiel 14 zusätzlich 5 Gew.% Thermolin[R] 101, in Beispiel 18 zusätzlich 15 Gew.% SA136 und 10 Gew.% TDCP zugesetzt.

Die Stabilität aller Dispersionen lag bei über 6 Monaten, ohne daß Sedimentation eintrat.

## Herstellung von Schaumstoffen

Die gemäß Beispielen V1, V2, 1 bis 8, 13 bis 16 und 18 erhaltenen Melamin-Polyetherol-Dispersionen wurden jeweils gemäß folgender Rezeptur vermischt:

80 Gew.Teile Melamin-Dispersion, 60 Gew. Teile des jeweiligen Polyols, 1,5 Gew.Teile Wasser als Schäummittel, 0,05 Gew.Teile Dibutylzinndilaurat als Katalysator, 0,5 Gew.Teile Diethanolamin 85%ig als Vernetzer und 0,08 Gew.Teile Dabco[R] 33LV (33%ige Lösung von Triethylendiamin in Dipropylen glykol, Fa. Air Products) als Katalysator, 1,0 Gew.Teile Silicon 5043 (Dow Corning) als Schaumstabilisator, 5 Gew.Teile Thermolin[R] 101 (Tetrakis(2-chlorethyl)ethylendiphosphat, Fa. Olin) und 10 Gew.Teile Frigen[R] 11 (Hoechst).

Diese Mischung wurde anschließend während 3 sec. mit 22 Gew.Teilen Toluylidendiisocyanat (TDI 80 von Bayer) verrührt und zur Bildung des Polyurethanschaumes in eine offene Blockform gegossen.

Der erhaltene Polyurethanschaum wurde auf seine Zugfestigkeit (DIN 53571), Weiterreißfestigkeit (DIN 53575), Druckverformungsrest bei 90 % (DIN 53572), Dichte (DIN 53420) sowie auf sein Brandverhalten (BS 5852-2) geprüft. Gemäß BS 5852-2 werden etwa 1 kg des Polyurethanschaumstoffes mit Crib 5 beflammt, wobei ein maximaler Gewichtsverlust von 60 g zulässig ist. Der Gewichtsverlust der Proben mit einem Melamingehalt von über etwa 30 Gew. % lag unter diesem Wert. Die Werte sind gemeinsam mit den mechanischen Eigenschaften der Weichschäume in Tabelle 3 zusammengestellt.

Tabelle 1

| Verwendete Polyetherole | | OH-Zahl | Viskosität /25° C(mPas) | Beispiel |
|---|---|---|---|---|
| a) unmodifizierte Polyetherole | | | | |
| Caradol$^R$ 36-3 | Shell | 36 | 850 | 4,5,6,8,9,10,15,16,18 |
| Desmophen$^R$ 3900 | Bayer | 35 | 850 | 7,V2, |
| b) polymermodifizierte Polyetherole | | | | |
| Desmophen$^R$ 7652 | Bayer | 31 | 1500 | 3 |
| Polyurax$^R$ 1408 | BP | 30 | 1600 | V1, 1 |
| Voranol$^R$ CP 8020 | DOW | 30 | 1250 | 2,11,12,13,14,17 |

Tabelle 2

| Melamindispersionen in Polyetherolen | | | | | |
|---|---|---|---|---|---|
| | Melamin (Gew.%) | Harnstoff bzw.-derivate* (Gew.%) | Polyetherol | Viskosität/20° (mPas) | Dichte/20° C (g/ml) |
| V1 | 50 | - | Polyurax 1408 | 15 000 | 1,25 |
| V2 | 50 | - | Desmophen 3900 | 6 000 | 1,22 |
| 1 | 49,5 | 0,5 U | Polyurax 1408 | 20 000 | 1,22 |
| 2 | 49,5 | 0,5 U | Voranol CP 8020 | 10 000 | 1,22 |
| 3 | 49,5 | 0,5 U | Desmophen 7652 | 14 000 | 1,22 |
| 4 | 49,5 | 0,5 U | Caradol 36-3 | 9 000 | 1,22 |
| 5 | 49,9 | 0,1 U | Caradol 36-3 | 10 000 | 1,22 |
| 6 | 49 | 1 B | Caradol 36-3 | 15 000 | 1,22 |
| 7 | 49,5 | 0,5 U | Desmophen 3900 | 9 000 | 1,22 |
| 8 | 49,5 10TDCP | 0,5 U | Caradol 36-3 | 16 000 | 1,22 |
| 9 | 29 | 1,0 B | Caradol 36-3 | 5 000 | 1,15 |
| 10 | 24,5 25 SA 136 10 TDCP | 0,5 U | Caradol 36-3 | 20 000 | 1,22 |
| 11 | 45 | 5,0 B | Voranol CP 8020 | 14 000 | 1,15 |
| 12 | 70 | 0,1 U | Voranol CP 8020 | 80 000 | 1,35 |
| 13 | 49,5 5 TCA | 0,5 T | Voranol CP 8020 | 25 000 | 1,30 |
| 14 | 49,5 5 Thermolin | 0,5 U | Voranol CP 8020 | 15 000 | 1,30 |
| 15 | 49 | 1 M | Caradol 36-3 | 9 000 | 1,22 |
| 16 | 49 | 1 B | Caradol 36-3 | 9 000 | 1,22 |
| 17 | 39,6 | 0,1 U 0,1 M 0,1 T 0,1 B | Voranol CP 8020 | 8 000 | 1,20 |
| 18 | 24 15 SA 136 10 TDCP | 1 B | Caradol 36-3 | 7 000 | 1,25 |

* U (Harnstoff), M (Methylharnstoff), T (Thioharnstoff), B (Biuret)

Tabelle 3

| Weichschaumstoffe | | | | | | |
|---|---|---|---|---|---|---|
| | Dichte (kg/m³) | Weiterreißfestigkeit (N/m) | Zugfestigkeit (kPa) | Druckverformungsrest bei 90 % Verformung (%) | Brandverhalten Gewichtsverlust (g) | Probengewicht (g) |
| V1 | 40 | 290 | 100 | 10 | 19 | 1010 |
| V2 | 38 | 275 | 90 | 11 | 20 | 960 |
| 1 | 40 | 305 | 105 | 8 | 11 | 1015 |
| 2 | 39 | 320 | 95 | 9 | 15 | 990 |
| 3 | 38 | 280 | 100 | 8 | 16 | 960 |
| 4 | 40 | 310 | 110 | 10 | 18 | 1015 |
| 5 | 38 | 290 | 95 | 7 | 19 | 960 |
| 6 | 39 | 270 | 95 | 6 | 17 | 990 |
| 7 | 40 | 280 | 110 | 8 | 20 | 1010 |
| 8 | 37 | 275 | 105 | 9 | 10 | 940 |
| 13 | 41 | 290 | 100 | 7 | 20 | 1030 |
| 14 | 38 | 300 | 110 | 8 | 15 | 960 |
| 15 | 39 | 310 | 105 | 11 | 12 | 990 |
| 16 | 37 | 300 | 110 | 9 | 22 | 940 |
| 18 | 40 | 330 | 110 | 5 | 8 | 1005 |

**Ansprüche**

1. Melaminzubereitung aus 80 bis 99,9 Gew.% Melamin mit einer mittleren Korngröße von 0,01 bis 0,1 mm und 0,1 bis 20 Gew.% Harnstoff, Thioharnstoff, Biuret oder eines durch niedere Alkylgruppen substituierten Harnstoffs oder Thioharnstoffs zur Herstellung einer stabilen Dispersion in Polyetherolen, wobei Melamin von 0 bis 50 % seines Gewichtes durch weitere Flammschutzmittel ersetzt sein kann.

2. Melaminzubereitung gemäß Anspruch 1, dadurch gekennzeichnet, daß sie 80 bis 99,3 Gew.% Melamin und 0,7 bis 20 Gew.% Harnstoff, Thioharnstoff, Biuret oder eines durch niedere Alkylgruppen substituierten Harnstoffs oder Thioharnstoffs enthält.

3. Verwendung einer Melaminzubereitung aus 80 bis 99,9 Gew.% Melamin mit einer mittleren Korngröße von 0,01 bis 0,1 mm und 0,1 bis 20 Gew.% Harnstoff, Thioharnstoff, Biuret oder eines durch niedere Alkylgruppen substituierten Harnstoffs oder Thioharnstoffs zur Herstellung einer stabilen Dispersion in Polyetherolen, wobei Melamin von 0 bis 50 % seines Gewichtes durch weitere Flammschutzmittel ersetzt sein kann.

4. Verwendung einer Melaminzubereitung gemäß Anspruch 3, dadurch gekennzeichnet, daß sie 80 bis 99,3 Gew.% Melamin und 0,7 bis 20 Gew.% Harnstoff, Thioharnstoff, Biuret oder eines durch niedere Alkylgruppen substituierten Harnstoffs oder Thioharnstoffs enthält.

5. Stabile Dispersion von Melamin in Polyetherolen mit einem Gehalt von 20 bis 70 Gew.% Melamin sowie gegebenenfalls weiteren üblichen Zusätzen, dadurch gekennzeichnet, daß sie 0,1 bis 5 Gew.% Harnstoff, Thioharnstoff, Biuret oder eines durch niedere Alkylgruppen substituierten Harnstoffs oder Thioharnstoffs enthält, daß die mittlere Korngröße des Melamins bei 0,01 bis 0,1 mm liegt, und daß Melamin von 0 bis 50 % seines Gewichtes durch weitere Flammschutzmittel ersetzt sein kann.

6. Stabile Dispersion nach Anspruch 5, dadurch gekennzeichnet, daß sie 0,5 bis 5 Gew.% Harnstoff, Thioharnstoff, Biuret oder eines durch niedere Alkylgruppen substituierten Harnstoffs oder Thioharnstoffs enthält.

7. Stabile Dispersion nach Anspruch 5 oder 6, dadurch gekennzeichnet, daß die Polyetherole eine OH-Zahl von 20 bis 40 aufweisen.

8. Melaminzubereitung bzw. stabile Dispersion nach einem der Ansprüche 1 bis 7, dadurch gekennzeichnet, daß das gegebenenfalls zugesetzte weitere Flammschutzmittel Bisdibromneopentylglykolborsäureguanidin ist.

9. Verfahren zur Herstellung einer stabilen Dispersion nach einem der Ansprüche 5 bis 8, dadurch gekennzeichnet, daß 20 bis 70 Gew.% Melamin mit einer mittleren Korngröße von 0,01 bis 0,1 mm, wobei Melamin von 0 bis 50 % seines Gewichtes durch weitere Flammschutzmittel ersetzt sein kann, 0,1 bis 5 Gew.% Harnstoff, Thioharnstoff, Biuret oder eines durch niedere Alkylgruppen substituierten Harnstoffs oder Thioharnstoffs, jeweils bezogen auf das Gesamtgewicht der Dispersion, sowie gegebenenfalls weitere übliche Zusätze in ein Polyetherol eingerührt und homogenisiert werden.

10. Verwendung einer Harnstoff, Thioharnstoff, Biuret, durch niedere Alkylgruppen substiuierten Harnstoff oder Thioharnstoff enthaltenden, stabilen Dispersion von Melamin mit einer mittleren Teilchengröße von 0,01 bis 0,1 mm in Polyetherolen nach einem der Ansprüche 5 bis 8, zur Herstellung von schwerentflammbaren Polyurethanschaumstoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 023 987 (BASF AG)<br>* Ansprüche *<br>--- | 1 | C 08 K 5/3492<br>C 08 L 71/00<br>C 08 L 75/04<br>C 08 J 9/00 //<br>(C 08 K 5/3492<br>C 08 K 5:21 )<br>(C 08 K 5/3492<br>C 08 K 5:39 ) |
| P,A | EP-A-0 352 528 (BAYER AG)<br>--- | | |
| P,A | EP-A-0 351 080 (BRIDGESTONE CORP.)<br>----- | | |

**RECHERCHIERTE SACHGEBIETE (Int. Cl.5)**

C 08 K
C 08 L
C 08 J

Der vorliegende Recherchenbericht wurde für alle Patentansprüche erstellt

| Recherchenort | Abschlußdatum der Recherche | Prüfer |
|---|---|---|
| DEN HAAG | 11-07-1990 | DE LOS ARCOS Y VELAZQUEZ |